# EUROPÄISCHE PATENTSCHRIFT

(11) **EP 3 729 968 B1**
(45) Veröffentlichungstag und Bekanntmachung des Hinweises auf die Patenterteilung: **29.12.2021**
(21) Anmeldenummer: 19171118.3
(22) Anmeldetag: 25.04.2019
(51) Int. Cl.: A22C 21/00

(54) **TRANSPORTVORRICHTUNG ZUM TRANSPORTIEREN VON ENTWEIDETEN GEFLÜGELKÖRPERN ODER TEILEN DAVON**
TRANSPORT APPARATUS FOR TRANSPORTING EVISCERATED POULTRY BODIES OR PARTS THEREOF
APPAREIL DE TRANSPORT DESTINÉ À TRANSPORTER DES CARCASSES DE VOLAILLE VIDES OU DES PARTIES DESDITES CARCASSES DE VOLAILLE

(43) Veröffentlichungstag der Anmeldung: 28.10.2020
(73) Patentinhaber: Nordischer Maschinenbau Rud. Baader GmbH + Co. KG, 23560 Lübeck (DE)
(72) Erfinder: RIGGERT, Lasse, 23554 Lübeck (DE); FISCHER, Valentin, 23560 Lübeck (DE)
(74) Vertreter: Stork Bamberger Patentanwälte PartmbB

(56) Entgegenhaltungen:
- EP-A1- 0 935 922
- EP-A1- 3 516 964
- EP-A2- 3 545 767
- WO-A1-2015/065190
- US-A- 4 780 930
- US-A1- 2013 037 380

## Beschreibung

Die Erfindung betrifft eine Transportvorrichtung, ausgebildet und eingerichtet zum Transportieren von entweideten Geflügelkörpern oder Teilen davon in Transportrichtung T entlang eines Transportpfads, entlang dem unterschiedliche Bearbeitungsstationen angeordnet sein können, umfassend eine endlos umlaufend angetriebene Transporteinheit sowie mindestens einen daran befestigten Transportsattel zum Halten und Positionieren der Geflügelkörper oder Teilen davon während des Transports, wobei zur Befestigung des Transportsattels an der Transporteinheit eine Haltevorrichtung vorgesehen ist, die aus einem der Transporteinheit zugeordneten Aufnahmekörper und einem dem Transportsattel zugeordneten Befestigungskörper besteht, der lösbar mit dem Aufnahmekörper verbunden und um eine Drehachse D drehbar im Aufnahmekörper gelagert ist, wobei die Haltevorrichtung eine Rasteinrichtung umfasst, mittels der der Befestigungskörper und damit der Transportsattel in mindestens zwei unterschiedlichen Rastpositionen arretierbar ist, wobei die Rasteinrichtung einen Rasthebel und mindestens zwei Rastbolzen umfasst, wobei der Rasthebel um eine Schwenkachse S, die parallel zur Drehachse D ausgerichtet ist, schwenkbar an einem Grundkörper des Aufnahmekörpers angeordnet ist und aus einer Verriegelungsposition, in der der Rasthebel mit einem Rastbolzen, der dem Befestigungskörper zugeordnet ist, in Eingriff ist, in eine Freigabeposition, in der der Rasthebel außer Eingriff mit einem Rastbolzen des Befestigungskörpers ist, und zurück bewegbar ist, wobei die Transportvorrichtung ein erstes Betätigungsorgan zum Betätigen des Rasthebels mindestens aus der Verriegelungsposition in die Freigabeposition und ein zweites Betätigungsorgan zum Drehen des Befestigungskörpers in der Freigabeposition des Rasthebels umfasst.

Solche Transportvorrichtungen kommen in der Nahrungsmittel verarbeitenden Industrie zum Einsatz, um zu bearbeitende Produkte entlang des Transportpfades mit unterschiedlichen Bearbeitungsstationen in Eingriff zu bringen (vgl. WO 2015/065190 A1). Während der Bearbeitung müssen die Produkte in einer definierten Position fixiert sein.

Grundsätzlich befindet sich daher jeder Transportsattel in seiner Verriegelungsposition. Das bedeutet, dass der Rasthebel mit dem Befestigungskörper in Eingriff steht und dadurch ein Verdrehen des Transportsattels verhindert. Die auf dem Transportsattel befindlichen Produkte müssen für unterschiedliche Bearbeitungsschritte aber teilweise in unterschiedlichen Ausrichtungen in Bezug auf die Bearbeitungsstationen positioniert sein. Um den Transportsattel und damit die aufgesattelten Produkte oder Teile davon in eine andere Position zu bringen, muss dann zum einen die Verriegelung gelöst werden, und zum anderen ist der Transportsattel zu drehen. Entsprechend sind die Betätigungsorgane angeordnet. Durch einen Kontakt des Betätigungsorgans zum Betätigen des Rasthebels mit demselben wird dieser um die Schwenkachse S außer Eingriff mit dem am Befestigungskörper befindlichen Rastbolzen in die Freigabeposition geschwenkt. Diese Freigabeposition wird solange gehalten, bis das nachgelagerte Betätigungsorgan zum Drehen des Befestigungskörpers in Eingriff bzw. in Wirkverbindung mit diesem steht. Durch den Transport der Fördereinheit entlang des Transportpfads wird der Befestigungskörper so weit gedreht, bis der Rasthebel mit dem nächstfolgenden Rastbolzen des Befestigungskörpers in Eingriff kommt.

Insbesondere kommen solche Transportvorrichtungen in halbautomatischen oder vollautomatischen Brustkappenfiletiermaschinen zum Einsatz, um die zu bearbeitenden Geflügelkörper oder Teile davon in die optimale Position zu den entlang des Transportpfads angeordneten Bearbeitungsstationen zu bringen. Bei den bisher bekannten Lösungen zum Lösen und Fixieren der Rasthebel ist der Rasthebel der Rasteinrichtung federbetätigt. Das bedeutet, dass an dem Aufnahmekörper eine Feder angeordnet ist, die den Rasthebel grundsätzlich in der Verriegelungsposition hält, wobei die Feder in der Verriegelungsposition im Wesentlichen entspannt ist. Das bedeutet, dass nur eine geringe Kraft in der Verriegelungsposition wirkt. Die Feder zieht den Rasthebel quasi in die Verriegelungsposition, in der sich der Rasthebel in einer Rastposition mit einem Rastbolzen des Befestigungskörpers befindet. Die Bewegung des Rasthebels aus der Verriegelungsposition in die Freigabeposition erfolgt dann gegen eine stetig ansteigende Federkraft, wenn der Rasthebel beim Transport entlang des Transportpfads gegen das Betätigungsorgan zum Betätigen des Rasthebels stößt, wodurch der Rasthebel außer Eingriff mit dem Rastbolzen schwenkt. Das bedeutet, dass in der Freigabeposition eine große Federkraft wirkt. In der Freigabeposition des Rasthebels kommt das Betätigungsorgan zum Drehen des Befestigungskörpers in Eingriff mit letzterem, so dass der Befestigungskörper bei fortgesetztem Transport gedreht wird. Wenn das Drehen des Befestigungskörpers durch das Betätigungsorgan zum Drehen ausgelöst ist, gibt das Betätigungsorgan zum Betätigen des Rasthebels diesen nach einem vorbestimmten Weg wieder frei, so dass die Feder den Rasthebel zurück in Richtung der Verriegelungsposition zieht. Wenn der Rasthebel die nächstfolgende Rastposition erreicht, "schnappt" der Rasthebel zur Verriegelung in Eingriff mit dem nächstfolgenden Rastbolzen.

Wie erwähnt, wirkt die höchste Federkraft der Feder der Rasteinrichtung in der Freigabeposition, während die geringste Federkraft in der Verriegelungsposition wirkt. Das führt zum einen dazu, dass die Verriegelungsposition des Rasthebels unsicher ist. Mit anderen Worten wird der Rasthebel nur mit einer geringen Kraft in der Verriegelungsposition gehalten. Zum anderen wirkt sich das wiederholende Bewegen des Rasthebels aus der Rastposition in die Freigabeposition aufgrund der dabei wirkenden und vor allem steigenden Kraftwiderstände verschleißfördernd aus, so dass die Lebensdauer der Federn begrenzt ist. Des Weiteren benötigt eine Federlösung bzw. die dazugehörige Feder einen erhöhten Bauraum und ist aufgrund der unebenen Oberflächenstruktur schwer zu reinigen.

Der Erfindung liegt somit die Aufgabe zugrunde, eine Transportvorrichtung mit einer kompakten und einfach zu reinigenden Rasteinrichtung vorzuschlagen, die eine sichere und verschleißarme Positionierung der Transportsättel und Arretierung derselben in der Verriegelungsposition sicherstellt.

Diese Aufgabe wird durch eine Transportvorrichtung gemäß Anspruch 1 dadurch gelöst, dass die Rasteinrichtung mindestens zwei magnetische Elemente umfasst, wobei ein erstes magnetisches Element dem Aufnahmekörper zugeordnet ist und ein zweites magnetisches Element dem Rasthebel zugeordnet ist, derart, dass sich jeweils ungleichnamige Pole des ersten magnetischen Elementes und des zweiten magnetischen Elementes zum Ziehen des Rasthebels in die Verriegelungsposition einander anziehend gegenüberstehen. Dadurch, dass die Federlösung durch eine Magnetlösung ersetzt wird, ist auf einfache Weise eine langlebige und leicht zu reinigende Rasteinrichtung der Transportvorrichtung geschaffen. Besonders vorteilhaft ist jedoch der technische Effekt, dass die größte (Halte-)Kraft der Rasteinrichtung in der Verriegelungsposition existiert, was zu einer besonders sicheren und präzisen Positionierung der Transportsättel führt, und eine geringere und vor allem abnehmende Kraft in der Freigabeposition, wodurch eine geringere mechanische Belastung der Rasteinrichtung besteht.

Eine besonders bevorzugte Weiterbildung ist dadurch gekennzeichnet, dass die Rasteinrichtung ein drittes magnetisches Element umfasst, das dem Aufnahmekörper zugeordnet und auf der dem ersten magnetischen Element gegenüberliegenden Seite des Rasthebels platziert ist, derart, dass sich gleichnamige Pole des zweiten magnetischen Elementes und des dritten magnetischen Elementes zum Drücken des Rasthebels in die Verriegelungsposition einander abstoßend gegenüberstehen. Die ersten und zweiten magnetischen Elemente gewährleisten einen sicheren Halt des Rasthebels in der Verriegelungsposition. Das dritte magnetische Element sorgt dafür, dass der Rasthebel zuverlässig und zügig aus der Freigabeposition zurück in die Verriegelungsposition gedrückt wird. Dadurch ist die zuverlässige Funktionalität der Rasteinrichtung optimiert.

In einer vorteilhaften Ausführungsform weist der Grundkörper des Aufnahmekörpers an seinem in Transportrichtung T nachlaufenden Ende auf der dem Befestigungskörper zugewandten Seite eine Vertiefung auf, in die der Rasthebel mit einem Vorsprung mindestens abschnittsweise eintaucht, wobei das erste magnetische Element in der Vertiefung des Grundkörpers im Bereich einer Rückwand und das zweite magnetische Element in dem Vorsprung des Rasthebels positioniert ist. Mit dieser platzsparenden Anordnung der magnetischen Elemente ist eine besonders sichere und kompakte Rasteinrichtung geschaffen.

Vorteilhafterweise ist das dritte magnetische Element in der Vertiefung des Grundkörpers im Bereich einer Seitenwand positioniert, derart, dass der Rasthebel mit seinem Vorsprung, in dem sich das zweite magnetische Element befindet, sandwichartig zwischen dem ersten und dem dritten magnetischen Element angeordnet ist. Durch die (in Transportrichtung T) serielle Anordnung der magnetischen Elemente ist zum einen ein Ziehen des Rasthebels für eine sichere Verriegelung und zum anderen ein zuverlässiges Drücken des Rasthebels aus der Freigabeposition zurück in die Verriegelungsposition gewährleistet. Des Weiteren ermöglicht diese Anordnung eine platzsparende und damit Bauraum reduzierende Ausbildung der Rasteinrichtung.

Eine zweckmäßige Weiterbildung ist dadurch gekennzeichnet, dass der Grundkörper im Bereich der Vertiefung einen Durchbruch aufweist, dessen Hauptausrichtung parallel zur Schwenkachse S und Drehachse D ausgerichtet ist, derart, dass der Vorsprung des Rasthebels mit seinem freien Ende mindestens abschnittsweise in diesen Durchbruch eintaucht, derart, dass eine Seitenwand des Durchbruchs in Ergänzung zum Rastbolzen als Anschlag für den Rasthebel in seiner Verriegelungsposition ausgebildet ist. Mit anderen Worten weist der Grundkörper quer zur Transportrichtung T eine umlaufend von Seitenwänden begrenzte Öffnung auf, wobei eine Seitenwand, nämlich die in Transportrichtung T nachlaufende Seitenwand, eine Anschlag- oder Anlagefläche für den Vorsprung des Rasthebels bildet. Damit wird die Stabilität der Rasteinrichtung erhöht.

Besonders bevorzugt ist dem Befestigungskörper ein Drehkörper in Form eines Malteserkreuzes zugeordnet, das zum einen vier im Bereich des Umfangs um 90° versetzt zueinander angeordnete Ausnehmungen zum Eingreifen des Betätigungsorgans zum Drehen des Befestigungskörpers und zum anderen auf der dem Aufnahmekörper zugewandten Seite mindestens vier um 90° versetzt zueinander angeordnete Rastbolzen, die mit dem Rasthebel in Wirkverbindung bringbar sind, aufweist. Mit dieser Ausbildung ist das Drehen des Befestigungskörpers in 90°-Schritten zur Bildung von vier Rastpositionen auf einfache und sichere Weise gewährleistet.

Vorteilhafterweise weist der Rasthebel auf seiner der Drehachse D zugewandten Innenseite eine Ausnehmung zum Aufnehmen eines Rastbolzens auf. Die Innenseite weist insgesamt einen bogenförmigen Verlauf auf, wobei der bogenförmige Verlauf durch die Ausnehmung unterbrochen ist. Die Größe der Ausnehmung ist an die Rastbolzen angepasst. Im verriegelten Zustand liegt der Rastbolzen in der Ausnehmung, so dass ein Drehen des Befestigungskörpers verhindert ist. Sobald der Rasthebel außer Eingriff mit dem Rastbolzen ist, kann der Befestigungskörper gedreht werden, wobei beim Drehen ein nachfolgender Rastbolzen auf der bogenförmigen Innenseite des Rasthebels gleitet, bis der Rastbolzen wieder in die Ausnehmung "schnappt". Dadurch ist ein besonders einfaches und dennoch besonders sicheres Verdrehen und Verriegeln gewährleistet.

Bevorzugt umfasst die Transporteinheit eine Transportkette und entlang der Transportkette ist mindestens abschnittsweise mindestens eine Führungsschiene angeordnet, auf der der Aufnahmekörper der Haltevorrichtung mit einer in dem Grundkörper ausgebildeten Nut geführt ist. Dadurch sind ein ruhiger Lauf der Transportkette und ein präzises Positionieren der Transportsättel sichergestellt.

In einer besonders vorteilhaften Weiterbildung sind zwei beabstandet zueinander angeordnete Führungsschienen mindestens abschnittsweise entlang der Transportkette angeordnet, zwischen denen der Grundkörper mit entsprechenden Nuten geführt ist, wobei an einer Führungsschiene das Betätigungsorgan zum Betätigen des Rasthebels und an der anderen Führungsschiene das Betätigungsorgan zum Drehen des Befestigungskörpers angeordnet ist. Dadurch, dass der Grundkörper an zwei gegenüberliegenden Seiten geführt ist, werden die zuvor genannten Vorteile noch verstärkt. Die Anordnung der Betätigungsorgane kann jedoch auch variieren.

Zweckmäßigerweise ist das Betätigungsorgan zum Drehen des Befestigungskörpers in Transportrichtung T der Transporteinheit hinter dem Betätigungsorgan zum Betätigen des Rasthebels angeordnet. Dadurch ist ein besonders einfacher Aufbau der Transportvorrichtung gewährleistet.

Eine vorteilhafte Ausführungsform ist dadurch gekennzeichnet, dass der Rasthebel mit einer Betätigungsnase über den Grundkörper des Aufnahmekörpers hinausragt, derart, dass das Betätigungsorgan zum Betätigen des Rasthebels beim Passieren des Transportsattels mit der Betätigungsnase des Rasthebels in Wirkverbindung tritt. Mit dieser Ausbildung ist eine besonders einfache und zuverlässige Betätigung der Rasteinrichtung geschaffen.

Vorteilhafterweise sind die magnetischen Elemente mindestens teilweise als Stabmagnete ausgebildet, wobei die Stabmagnete mit ihrer Längsachse in Transportrichtung T ausgerichtet sind. Auf diese Weise ist eine platzsparende Anordnung der magnetischen Elemente gewährleistet, in der zwischen dem ersten und dem zweiten magnetischen Element ungleichnamige Pole einander zugekehrt sind, während zwischen dem zweiten und dem dritten magnetischen Element gleichnamige Pole einander zugekehrt sind.

In einer bevorzugten Ausführungsform sind die Stabmagnete mindestens teilweise in Sacklöchern angeordnet, wobei die offenen Seiten der Sacklöcher mittels einer Abdeckung verschlossen sind, derart, dass die innerhalb der Sacklöcher befindlichen Stabmagneten vollständig gegenüber der Umgebung abgeschirmt sind. Dadurch dass die Stabmagneten in geschlossenen Taschen angeordnet sind, sind die Stabmagnete gegen Verschmutzung geschützt und es entstehen glatte Oberflächen, die besonders einfach zu reinigen sind.

Weitere zweckmäßige und/oder vorteilhafte Merkmale und Weiterbildungen zur Transportvorrichtung ergeben sich aus den Unteransprüchen und der Beschreibung. Besonders bevorzugte Ausführungsformen der Transportvorrichtung werden anhand der beigefügten Zeichnung näher erläutert. In der Zeichnung zeigt:
- Fig. 1: einen Ausschnitt einer Transportvorrichtung mit zwei Transportsätteln in unterschiedlicher Position in Vorderansicht,

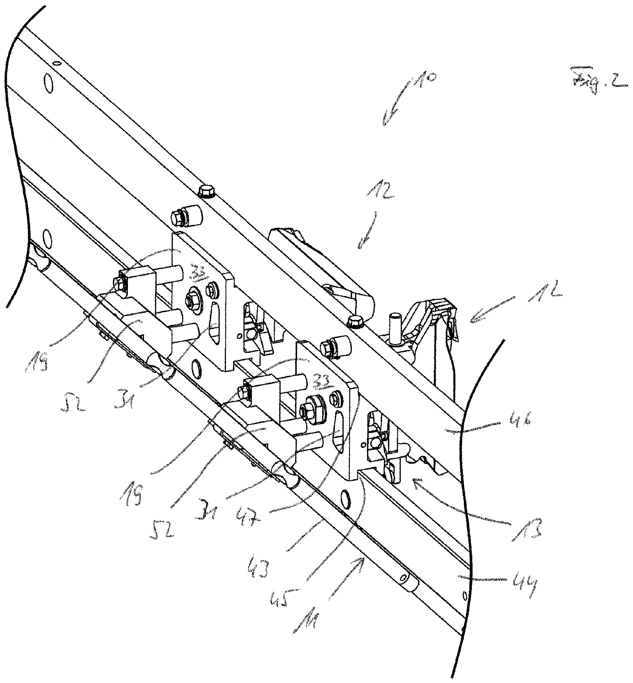

- Fig. 2: den Ausschnitt gemäß Figur 1 in Rückansicht,

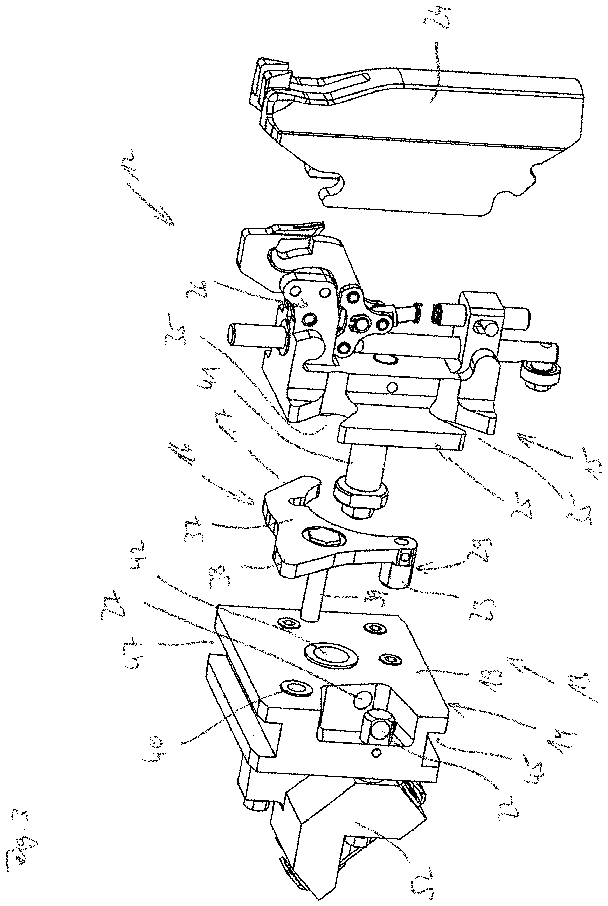

- Fig. 3: eine Explosionsdarstellung eines Transportsattels mit Haltevorrichtung,

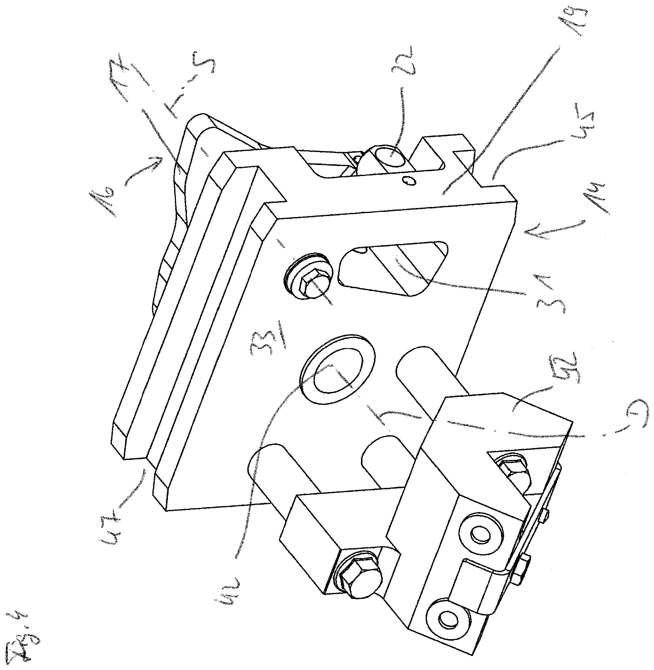

- Fig. 4: einen Grundkörper des Aufnahmekörpers der Haltevorrichtung mit Rasthebel von hinten,
- Fig. 5: den Grundkörper gemäß Figur 4 von vorne,

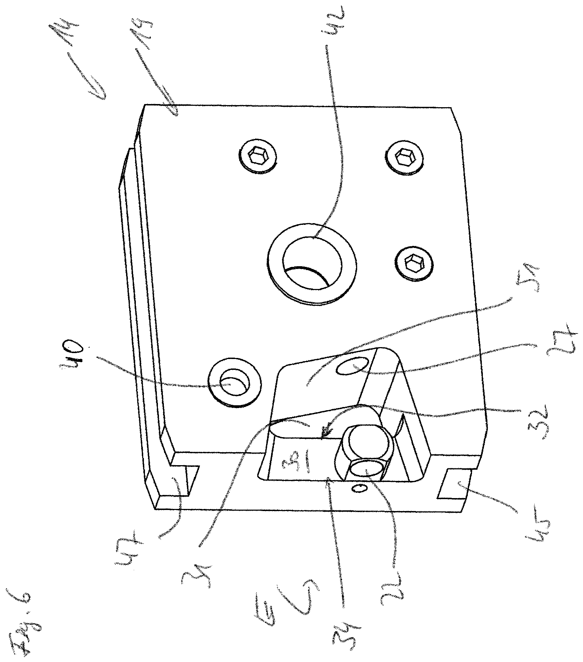

- Fig. 6: den Grundkörper gemäß Figur 5 ohne Rasthebel,
- Fig. 7: den Rasthebel von hinten,
- Fig. 8: den Rasthebel von vorne,

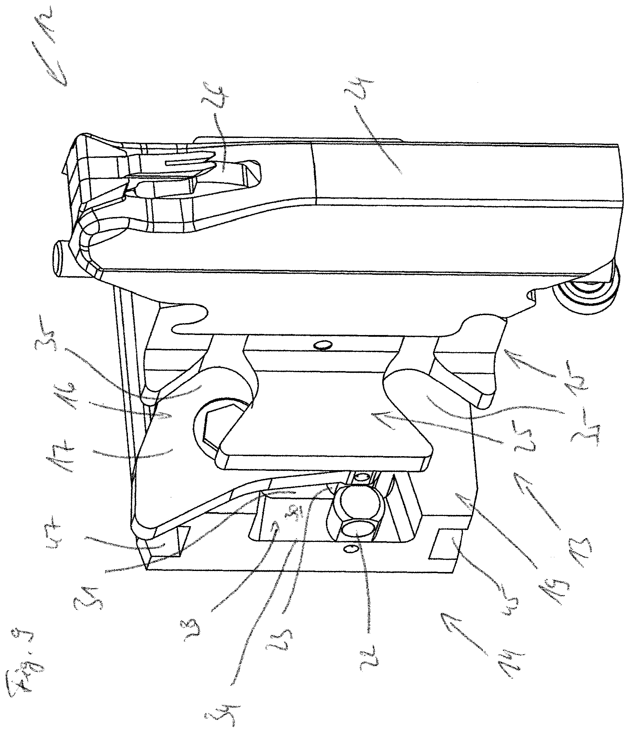

- Fig. 9: den vollständigen Transportsattel von schräg vorne,

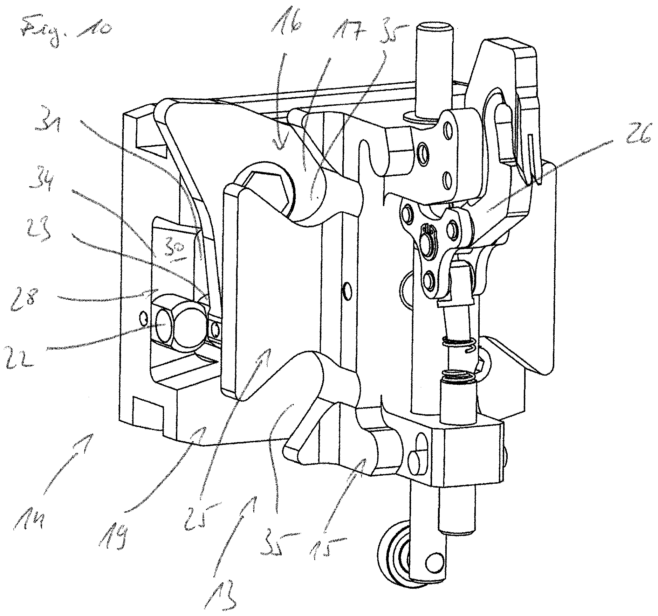

- Fig. 10: die Darstellung gemäß Figur 9 ohne Stützkörper des Transportsattels,

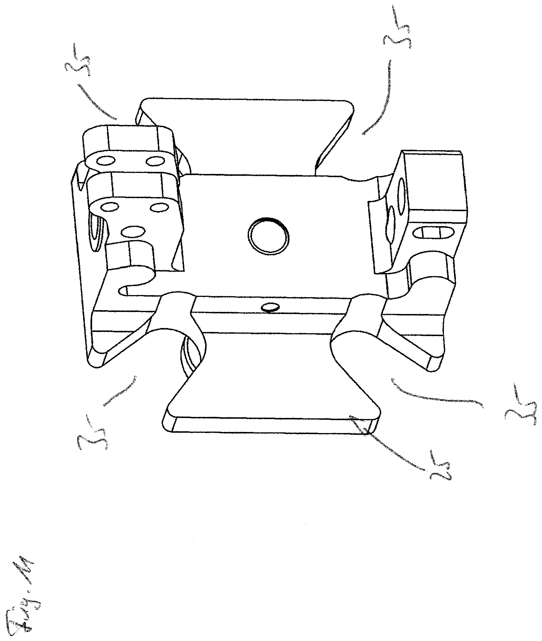

- FIG 11: das Drehorgan als Bestandteil des Befestigungskörpers von schräg vorne, und
- Fig. 12: das Drehorgan gemäß Figur 11 von hinten.

Die in der Zeichnung nur ausschnittsweise dargestellte Transportvorrichtung dient zum Transportieren und Positionieren von entweideten Geflügelkörpern oder Teilen davon, wie z.B. Brustkappen oder Vorderhälften. Die Transportvorrichtung ist in entsprechender Weise auch für andere Produkte einsetzbar, die in unterschiedlichen Positionen entlang des Transportpfads positionierbar sein sollen.

Die dargestellte Transportvorrichtung 10 ist zum Transportieren von entweideten Geflügelkörpern oder Teilen davon in Transportrichtung T entlang eines Transportpfads ausgebildet und eingerichtet. Entlang des Transportpfads können unterschiedliche Bearbeitungsstationen angeordnet sein, die eine unterschiedliche Positionierung der Geflügelkörper oder Teilen davon erfordern. Die Transportvorrichtung 10 umfasst eine endlos umlaufend angetriebene Transporteinheit 11 sowie mindestens einen daran befestigten Transportsattel 12 zum Halten und Positionieren der Geflügelkörper oder Teilen davon während des Transports, wobei zur Befestigung des Transportsattels 12 an der Transporteinheit 11 eine Haltevorrichtung 13 vorgesehen ist, die aus einem der Transporteinheit 11 zugeordneten Aufnahmekörper 14 und einem dem Transportsattel 12 zugeordneten Befestigungskörper 15 besteht, der lösbar mit dem Aufnahmekörper 14 verbunden und um eine Drehachse D drehbar im Aufnahmekörper 14 gelagert ist, wobei die Haltevorrichtung 13 eine Rasteinrichtung 16 umfasst, mittels der der Befestigungskörper 15 und damit der Transportsattel 12 in mindestens zwei unterschiedlichen Rastpositionen arretierbar ist, wobei die Rasteinrichtung 16 einen Rasthebel 17 und mindestens zwei Rastbolzen 18 umfasst, wobei der Rasthebel 17 um eine Schwenkachse S, die parallel zur Drehachse D ausgerichtet ist, schwenkbar an einem Grundkörper 19 des Aufnahmekörpers 14 angeordnet ist und aus einer Verriegelungsposition, in der der Rasthebel 17 mit einem Rastbolzen 18, der dem Befestigungskörper 15 zugeordnet ist, in Eingriff ist, in eine Freigabeposition, in der der Rasthebel 17 außer Eingriff mit einem Rastbolzen 18 des Befestigungskörpers 15 ist, und zurück bewegbar ist, wobei die Transportvorrichtung 10 ein erstes Betätigungsorgan 20 zum Betätigen des Rasthebels 17 mindestens aus der Verriegelungsposition in die Freigabeposition und ein zweites Betätigungsorgan 21 zum Drehen des Befestigungskörpers 15 in der Freigabeposition des Rasthebels 17 umfasst.

Diese Transportvorrichtung 10 zeichnet sich erfindungsgemäß dadurch aus, dass die Rasteinrichtung 16 mindestens zwei magnetische Elemente 22, 23 umfasst, wobei ein erstes magnetisches Element 22 dem Aufnahmekörper 14 zugeordnet ist und ein zweites magnetisches Element 23 dem Rasthebel 17 zugeordnet ist, derart, dass sich jeweils ungleichnamige Pole des ersten magnetischen Elementes 22 und des zweiten magnetischen Elementes 23 zum Ziehen des Rasthebels 17 in die Verriegelungsposition einander anziehend gegenüberstehen.

Die im Folgenden beschriebenen Merkmale und Weiterbildungen stellen für sich betrachtet oder in Kombination miteinander bevorzugte Ausführungsformen dar. Es wird ausdrücklich darauf hingewiesen, dass Merkmale, die in den Ansprüchen und/oder der Beschreibung und/oder der Zeichnung zusammengefasst oder in einer gemeinsamen Ausführungsform beschrieben sind, auch funktional eigenständig die weiter oben beschriebene Transportvorrichtung 10 weiterbilden können.

Die umlaufend angetriebene Transporteinheit 11 ist um nicht explizit dargestellte Umlenk- und/oder Antriebselemente geführt. Die Drehachsen der Umlenk- und/oder Drehelemente können horizontal ausgerichtet sein, z.B. zur Bildung eines Obertrums und eines Untertrums. Die Drehachsen können aber auch jede andere Ausrichtung aufweisen, z.B. 45° zur horizontalen Ausrichtung. Vorzugsweise sind mehrere Transportsättel an der Transporteinheit angeordnet. Der Transportpfad erstreckt sich über die gesamte umlaufende Länge der Transporteinheit 11. Mittels eines Antriebsmittels ist die Transporteinheit 11 intermittierend oder kontinuierlich antreibbar. Bevorzugt ist das Antriebsmittel mit einer Steuerungseinrichtung verbunden. Die Haltevorrichtungen 13 und genauer die Aufnahmekörper 14 umfassen Befestigungsmittel 52, mit denen die Verbindung zur Transporteinheit 11 hergestellt wird.

Jeder Transportsattel 12 kann einteilig oder mehrteilig ausgebildet sein. Der Transportsattel 12 umfasst den Befestigungskörper 15 und einen Stützkörper 24, der vorzugsweise lösbar mit dem Befestigungskörper 15 verbunden ist. Der Befestigungskörper 15 kann ebenfalls einteilig oder mehrteilig ausgebildet sein. Bevorzugt umfasst der Befestigungskörper 15 einen aus Kunststoff bestehenden Drehkörper 25 und einen aus Metall, z.B. Edelstahl, bestehenden Klemmkörper 26.

Vorzugsweise umfasst die Rasteinrichtung 16 ein drittes magnetisches Element 27, das dem Aufnahmekörper 14 zugeordnet und auf der dem ersten magnetischen Element 22 gegenüberliegenden Seite des Rasthebels 17 platziert ist, derart, dass sich gleichnamige Pole des zweiten magnetischen Elementes 23 und des dritten magnetischen Elementes 27 zum Drücken des Rasthebels 17 in die Verriegelungsposition einander abstoßend gegenüberstehen. Beispielsweise stehen sich der Nordpol des ersten magnetischen Elementes 22 und der Südpol des zweiten magnetischen Elementes 23 unmittelbar oder gering beabstandet zueinander gegenüber, während sich der Nordpol des zweiten magnetischen Elementes 23 und der Nordpol des dritten magnetischen Elements 27 unmittelbar oder gering beabstandet zueinander gegenüberstehen.

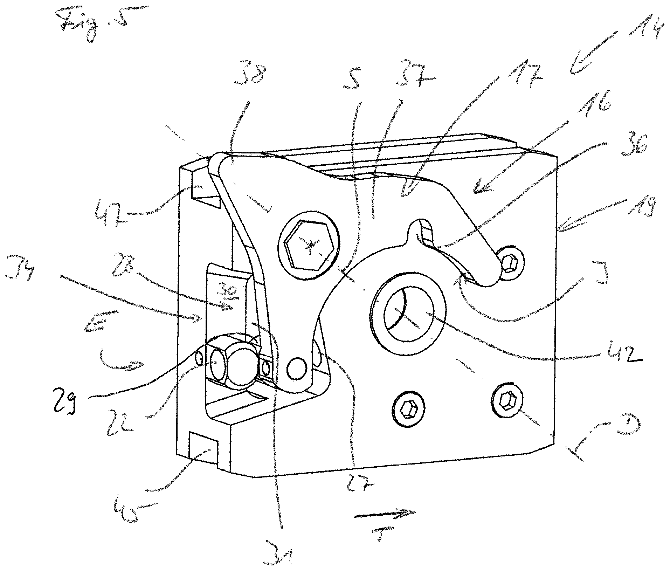

Der Grundkörper 19 des Aufnahmekörpers 14 weist an seinem in Transportrichtung T nachlaufenden Ende E auf der dem Befestigungskörper 15 zugewandten Seite eine Vertiefung 28 auf (siehe insbesondere Figur 5), in die der Rasthebel 17 mit einem Vorsprung 29 mindestens abschnittsweise eintaucht, wobei das erste magnetische Element 22 in der Vertiefung 28 des Grundkörpers 19 im Bereich einer Rückwand 30 und das zweite magnetische Element 23 in dem Vorsprung 29 des Rasthebels 17 positioniert ist. Selbstverständlich sind auch andere Konstruktionen und Anordnungen des Rasthebels 17 zum Grundkörper 19 möglich. Die Vertiefung 28, die in der gezeigten Ausführungsform zum nachlaufenden Ende E hin ohne Seitenwand auslaufend ausgebildet ist, kann z.B. auch umlaufend von Seitenwänden umgeben sein, wobei das erste magnetische Mittel 22 dann z.B. in einer Seitenwand des nachlaufenden Endes E angeordnet sein kann. Die Vertiefung 28 kann auch am vorauslaufenden Ende ausgebildet sein.

Das dritte magnetische Element 27 ist in der Vertiefung 28 des Grundkörpers 19 im Bereich einer Seitenwand 51 positioniert, derart, dass der Rasthebel 17 mit seinem Vorsprung 29, in dem sich das zweite magnetische Element 23 befindet, sandwichartig zwischen dem ersten und dem dritten magnetischen Element 22, 27 angeordnet ist. Die magnetischen Elemente 22, 23, 27 können auf den Grundkörper 19 bzw. den Rasthebel 17 aufgesetzt sein. Bevorzugt ist mindestens das dritte magnetische Element in den Grundkörper 19 eingelassen.

In einer nicht dargestellten Ausführungsform ist die Rückwand 33 des Grundkörpers 19 und damit auch die Rückwand 30 der Vertiefung 28 vollständig geschlossen ausgebildet. In der dargestellten Variante weist der Grundkörper 19 im Bereich der Vertiefung 28 einen Durchbruch 31 auf, dessen Hauptausrichtung parallel zur Schwenkachse S und Drehachse D ausgerichtet ist, derart, dass der Vorsprung 29 des Rasthebels 17 mit seinem freien Ende mindestens abschnittsweise in diesen Durchbruch 31 eintaucht, derart, dass eine Seitenwand 32 des Durchbruchs 31 in Ergänzung zum Rastbolzen 18 als Anschlag für den Rasthebel 17 in seiner Verriegelungsposition ausgebildet ist. Der Durchbruch 31 ist vom nachlaufenden Ende E beabstandet ausgebildet, so dass ein Verbindungssteg 34 gebildet ist, an dem bzw. auf dem das erste magnetische Element 22 angeordnet ist.

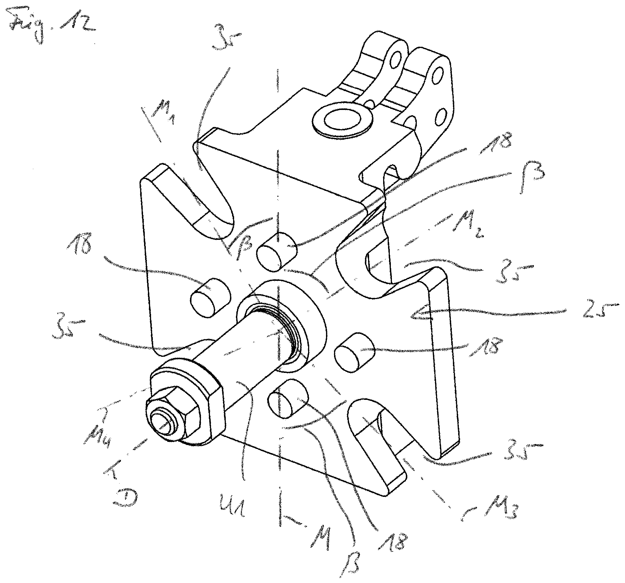

Dem Befestigungskörper 15 ist der Drehkörper 25 in Form eines Malteserkreuzes zugeordnet, das zum einen vier im Bereich des Umfangs um 90° versetzt zueinander angeordnete Ausnehmungen 35 zum Eingreifen des Betätigungsorgans 21 zum Drehen des Befestigungskörpers 15, und zum anderen auf der dem Aufnahmekörper 14 zugewandten Seite mindestens vier um 90° versetzt zueinander angeordnete Rastbolzen 18, die mit dem Rasthebel 17 in Wirkverbindung bringbar sind, aufweist (siehe insbesondere Figur 12). Der vorzugsweise quadratisch geformte Drehkörper 25, der auch als Drehkreuz bezeichnet werden kann, weist gleichmäßig über den Umfang verteilt in den Eckbereichen jeweils eine Ausnehmung 35 auf. Die Mittelachsen M₁, M₂, M₃ und M₄ der Ausnehmungen 35 sind jeweils um in einem Winkel β von etwa 45° zur Mittelachse M des Drehkörpers 25 ausgerichtet, weshalb der Drehkörper 25 die Form des Malteserkreuzes aufweist. Andere Formen und konstruktiven Ausgestaltungen des Drehkörpers 25 sind ebenfalls einsetzbar. Der Drehkörper 25 kann konstruktiv anders, z.B. als Drehteller, ausgebildet sein und vor allem weniger als vier und mehr als vier Ausnehmungen 35 und weniger als vier und mehr als vier Rastbolzen 18 aufweisen. In der bevorzugten und dargestellten Ausführungsform ist das Raster/Muster der vier Ausnehmungen 35 zum Raster/Muster der vier Rastbolzen um 45° versetzt um die Drehachse D angeordnet. Anstelle der nach außen offenen Ausnehmungen 35 können auch Langlöcher oder dergleichen vorgesehen sein. Die Rastbolzen 18 können auch durch Rastnasen, Rasthaken oder andere Rastelemente ersetzt werden. Der Befestigungskörper 15 weist eine Welle 41 auf, die zur Lagerung in einer Lagerbuchse 42 des Grundkörpers 19 ausgebildet ist.

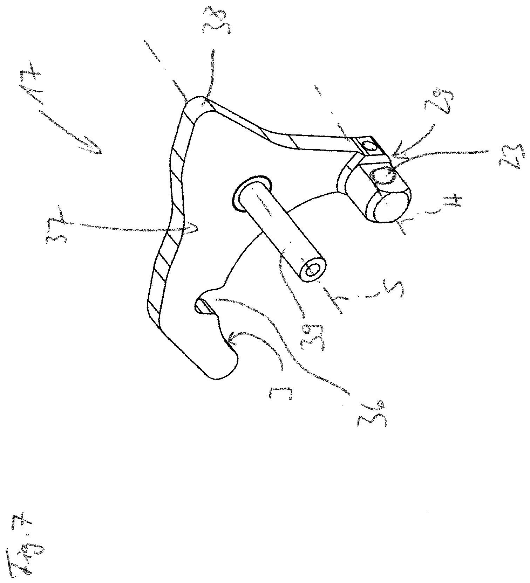

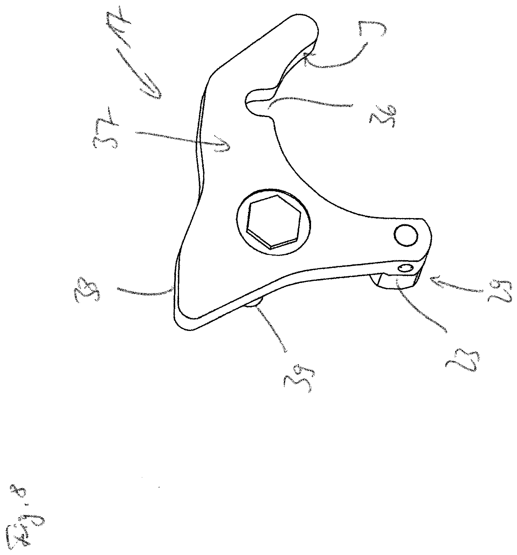

Die bevorzugte Ausbildung des Rasthebels 17 ist insbesondere den Figuren 5, 7 und 8 zu entnehmen. Der Rasthebel 17 weist auf seiner der Drehachse D zugewandten Innenseite I eine Ausnehmung 36 zum Aufnehmen eines Rastbolzens 18 aufweist. Die Innenseite I weist einen bogenförmigen Verlauf auf. Der bogenförmige Verlauf ist durch die Ausnehmung 36 unterbrochen. Es besteht auch die Möglichkeit, dass entlang der bogenförmigen Innenseite I mehr als eine Ausnehmung 36 ausgebildet ist. Der Rasthebel 17, der vorzugsweise einstückig ausgebildet ist, umfasst neben einem hakenförmigen Hebelkörper 37 den Vorsprung 29 sowie eine Betätigungsnase 38, die zum Anlegen und/oder zum Anschlagen an das Betätigungsorgan 20 zum Schwenken des Rasthebels 17 ausgebildet und eingerichtet ist. Wie erwähnt, ist an dem oder in dem Vorsprung 29 das zweite magnetische Element 23 angeordnet. Das magnetische Element 23 selbst kann unmittelbar am Hebelkörper 37 angeordnet oder befestigt sein und somit den Vorsprung 29 bilden. Die Hauptachse H des Vorsprungs 29 verläuft parallel zur Schwenkachse S. Zum Schwenken des Rasthebels 17 um die Schwenkachse S ist eine Welle 39 (siehe z.B. Figur 7) am Rasthebel 17 ausgebildet oder angeordnet, die zur Lagerung in einer Lagerbuchse 40 des Grundkörpers 19 ausgebildet ist.

Die Transporteinheit 11 umfasst bevorzugt eine Transportkette 43. Entlang der Transportkette 43 ist mindestens abschnittsweise mindestens eine Führungsschiene 44 angeordnet, auf der der Aufnahmekörper 14 der Haltevorrichtung 13 mit einer in dem Grundkörper 19 ausgebildeten Nut 45 geführt ist. Besonders bevorzugt sind zwei beabstandet zueinander angeordnete Führungsschienen 44, 46 mindestens abschnittsweise entlang der Transportkette 43 angeordnet, zwischen denen der Grundkörper 19 mit entsprechenden Nuten 45, 47 geführt ist. In der dargestellten Ausführungsform ist an einer Führungsschiene 46 das Betätigungsorgan 20 zum Betätigen des Rasthebels 17 und an der anderen Führungsschiene 44 das Betätigungsorgan 21 zum Drehen des Befestigungskörpers 15 angeordnet. Es besteht jedoch auch die Möglichkeit einer umgekehrten Anbringung. Die Betätigungsorgane 20, 21 können auch an einer gemeinsamen Führungsschiene 44 oder 46 angeordnet sein. Optional können die Betätigungsorgane 20, 21 auch separat von den Führungsschienen 44, 46 angeordnet sein.

Vorzugsweise ist das Betätigungsorgan 21 zum Drehen des Befestigungskörpers 15 in Transportrichtung T der Transporteinheit hinter dem Betätigungsorgan 20 zum Betätigen des Rasthebels 17 angeordnet. "Hinter" bezieht sich dabei nicht auf die konstruktive Anbringung, sondern auf die Position, in der die Betätigungsorgane 20, 21 in Eingriff mit dem Rasthebel 17 bzw. dem Befestigungskörper 15 kommen. Das Betätigungsorgan 20 zum Schwenken des Rasthebels 17 kann ein einfacher Bolzen, Anschlag oder dergleichen sein, der ortsfest an der Führungsschiene 46 angeordnet ist und im Transportweg der Betätigungsnase 38 des Rasthebels 17 liegt, derart, dass der Rasthebel 17 durch das Transportieren entlang des Transportpfads beim Passieren des Betätigungsorgan 20 außer Eingriff mit dem Rastbolzen 18 geschwenkt wird. In einer besonders bevorzugte Ausführungsform ragt der Rasthebel 17 mit der Betätigungsnase 38 über den Grundkörper 19 des Aufnahmekörpers 14 hinaus, derart, dass das Betätigungsorgan 20 zum Betätigen des Rasthebels 17 beim Passieren des Transportsattels 12 mit der Betätigungsnase 38 des Rasthebels 17 in Wirkverbindung tritt. Das Betätigungsorgan 20 kann auch eine frei drehbare Rolle 48 oder dergleichen sein. In anderen Ausführungsformen, bei denen der Rasthebel 17 über eine längere Distanz in der Freigabeposition gehalten werden soll/muss, beispielsweise, um den Befestigungskörper 15 mittels des Drehkörpers 25 um einen größeren Winkelbetrag zu drehen, kann das Betätigungsorgan 20 z.B. auch eine sich in Transportrichtung T erstreckende Schiene oder dergleichen sein. Das Betätigungsorgan 20 kann auch verstellbar an der Führungsschiene 46 angeordnet sein.

Das Betätigungsorgan 21 zum Drehen des Befestigungskörpers 15 kann ein einfaches Winkelelement 49 oder dergleichen sein, wobei ein Arm 50 des Winkelelementes 49 in den Transportweg des Drehkörpers 25 ragt, derart, dass der Drehkörper 25 beim Passieren des Transportsattels 12 mit einer Ausnehmung 35 in Eingriff mit dem Arm 50 kommt. Der Weitertransport in Transportrichtung T führt dann zum Drehen des Befestigungskörpers 15, im gezeigten Ausführungsbeispiel um 90°. In Transportrichtung T können hintereinander auch zwei oder mehr solcher Betätigungsorgane 21 angeordnet sein, um in Eingriff mit der jeweils nächsten Ausnehmung 35 des Drehkörpers 25 zu kommen.

Die magnetischen Elemente 22, 23, 27 sind mindestens teilweise als Stabmagnete ausgebildet, wobei die Stabmagnete mit ihrer Längsachse in Transportrichtung T ausgerichtet sind. Vorzugsweise sind die Stabmagnete 22, 23, 27 mit ihren Längsachsen im Wesentlichen fluchtend zueinander ausgerichtet. In der gezeigten Ausführungsform sind mindestens das erste und das dritte magnetische Element 22, 27 als Stabmagnet ausgebildet. Bevorzugt ist auch das zweite magnetische Element 23 als Stabmagnet ausgebildet. Die Stabmagnete sind mindestens teilweise in Sacklöchern angeordnet, wobei die offenen Seiten der Sacklöcher optional mittels einer Abdeckung verschlossen sind, derart, dass die innerhalb der Sacklöcher befindlichen Stabmagnete vollständig gegenüber der Umgebung abgeschirmt sind. Die magnetischen Elemente 22, 23, 27 umfassen jeweils Dauermagnete und/oder Elektromagnete. Besonders bevorzugt sind die Dauermagnete als Neodym-Magnete ausgebildet. Noch weiter bevorzugt handelt es sich um vernickelte Neodym-Magnete.

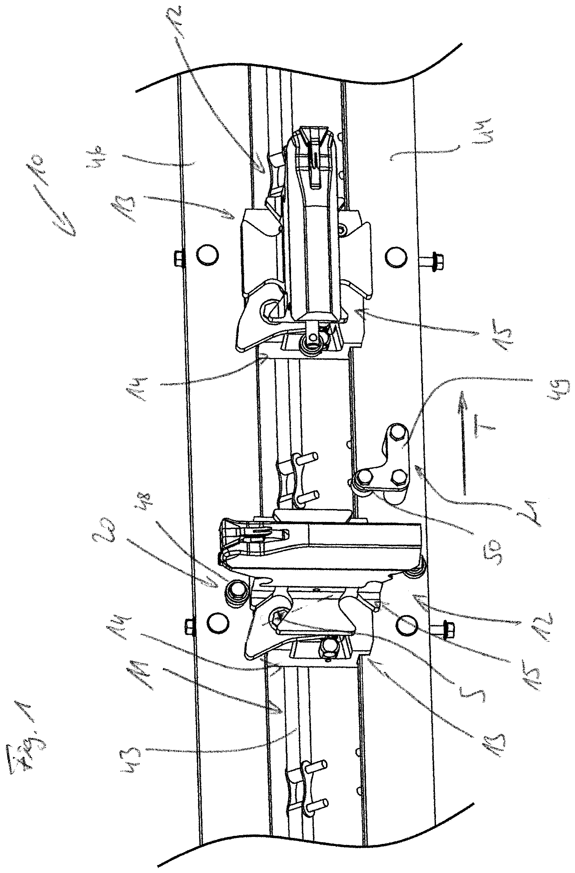

Das Funktionsprinzip der Rasteinrichtung 16 wird anhand der Figur 1 näher erläutert. Mittels der Transportkette 43 werden die Transportsättel 12 umlaufend angetrieben. Der in Transportrichtung T erste Transportsattel 12 ist mit seiner Hauptachse vertikal ausgerichtet. Beim Transport bzw. beim Bewegen der Transportkette 43 weiter in Transportrichtung T trifft der Rasthebel 17 mit seiner Betätigungsnase 38 gegen die Rolle 48. Dadurch wird der Rasthebel 17 (in der Ausführungsform gemäß Figur 1) gegen den Uhrzeigersinn um die Schwenkachse S geschwenkt und damit außer Eingriff mit dem Rastbolzen 18 des Befestigungskörpers 15 in die Freigabeposition geschwenkt. Der Befestigungskörper 15 und damit der Transportsattel 12 sind in dieser Phase frei drehbar. Beim Weitertransport bzw. beim Bewegen der Transportkette 43 weiter in Transportrichtung T trifft der Drehkörper 25 des Befestigungskörpers 15 mit einer der Ausnehmungen 35 auf den Arm 50 des Winkelelementes 49 und geht eine Wirkverbindung ein, die dazu führt, dass der frei drehbare Drehkörper 25 beim weiteren Bewegen in Transportrichtung T gegen den stehenden Arm 50 (in der Ausführungsform gemäß Figur 1) im Uhrzeigersinn um die Drehachse D gedreht wird.

Beim freien Drehen läuft ein Rastbolzen 18 auf der Innenseite I des Rasthebels 17. Dabei bzw. dadurch wird der Rasthebel 17 weiter in der Freigabeposition gehalten. Sobald der Rastbolzen 18 in den Bereich der Ausnehmung 36 des Rasthebels 17 kommt, nach etwa 90°-Drehung des Drehkörpers 25, schnappt der Rasthebel 17 durch die Anziehungskraft der ersten und zweiten magnetischen Elemente 22, 23 zurück in die Verriegelungsposition. Die abstoßende Wirkung der zweiten und dritten magnetischen Elemente 23, 27 wird diese Bewegung des Rasthebels 17 unterstützt. Damit ist der Transportsattel 12 mit seiner Hauptachse horizontal ausgerichtet.

## Patentansprüche

1. Transportvorrichtung (10), ausgebildet und eingerichtet zum Transportieren von entweideten Geflügelkörpern oder Teilen davon in Transportrichtung T entlang eines Transportpfads, entlang dem unterschiedliche Bearbeitungsstationen angeordnet sein können, umfassend eine endlos umlaufend angetriebene Transporteinheit (11) sowie mindestens einen daran befestigten Transportsattel (12) zum Halten und Positionieren der Geflügelkörper oder Teilen davon während des Transports, wobei zur Befestigung des Transportsattels (12) an der Transporteinheit (11) eine Haltevorrichtung (13) vorgesehen ist, die aus einem der Transporteinheit (11) zugeordneten Aufnahmekörper (14) und einem dem Transportsattel (12) zugeordneten Befestigungskörper (15) besteht, der lösbar mit dem Aufnahmekörper (14) verbunden und um eine Drehachse D drehbar im Aufnahmekörper (14) gelagert ist, wobei die Haltevorrichtung (13) eine Rasteinrichtung (16) umfasst, mittels der der Befestigungskörper (15) und damit der Transportsattel (12) in mindestens zwei unterschiedlichen Rastpositionen arretierbar ist, wobei die Rasteinrichtung (16) einen Rasthebel (17) und mindestens zwei Rastbolzen (18) umfasst, wobei der Rasthebel (17) um eine Schwenkachse S, die parallel zur Drehachse D ausgerichtet ist, schwenkbar an einem Grundkörper (19) des Aufnahmekörpers (14) angeordnet ist und aus einer Verriegelungsposition, in der der Rasthebel (17) mit einem Rastbolzen (18), der dem Befestigungskörper (15) zugeordnet ist, in Eingriff ist, in eine Freigabeposition, in der der Rasthebel (17) außer Eingriff mit einem Rastbolzen (18) des Befestigungskörpers (15) ist, und zurück bewegbar ist, wobei die Transportvorrichtung (10) ein erstes Betätigungsorgan (20) zum Betätigen des Rasthebels (17) mindestens aus der Verriegelungsposition in die Freigabeposition und ein zweites Betätigungsorgan (21) zum Drehen des Befestigungskörpers (15) in der Freigabeposition des Rasthebels (17) umfasst, **dadurch gekennzeichnet, dass** die Rasteinrichtung (16) mindestens zwei magnetische Elemente (22, 23) umfasst, wobei ein erstes magnetisches Element (22) dem Aufnahmekörper (14) zugeordnet ist und ein zweites magnetisches Element (23) dem Rasthebel (17) zugeordnet ist, derart, dass sich jeweils ungleichnamige Pole des ersten magnetischen Elementes (22) und des zweiten magnetischen Elementes (23) zum Ziehen des Rasthebels (17) in die Verriegelungsposition einander anziehend gegenüberstehen.

2. Transportvorrichtung (10) nach Anspruch 1, **dadurch gekennzeichnet, dass** die Rasteinrichtung (16) ein drittes magnetisches Element (27) umfasst, das dem Aufnahmekörper (14) zugeordnet und auf der dem ersten magnetischen Element (22) gegenüberliegenden Seite des Rasthebels (17) platziert ist, derart, dass sich gleichnamige Pole des zweiten magnetischen Elementes (23) und des dritten magnetischen Elementes (27) zum Drücken des Rasthebels (17) in die Verriegelungsposition einander abstoßend gegenüberstehen.

3. Transportvorrichtung (10) nach Anspruch 1 oder 2, **dadurch gekennzeichnet, dass** der Grundkörper (19) des Aufnahmekörpers (14) an seinem in Transportrichtung T nachlaufenden Ende (E)auf der dem Befestigungskörper (15) zugewandten Seite eine Vertiefung (28) aufweist, in die der Rasthebel (17) mit einem Vorsprung (29) mindestens abschnittsweise eintaucht, wobei das erste magnetische Element (22) in der Vertiefung (28) des Grundkörpers (19) im Bereich einer Rückwand (30) und das zweite magnetische Element (23) in dem Vorsprung (29) des Rasthebels (17) positioniert ist.

4. Transportvorrichtung (10) nach Anspruch 2 oder 3, **dadurch gekennzeichnet, dass** das dritte magnetische Element (27) in der Vertiefung (28) des Grundkörpers (19) im Bereich einer Seitenwand (positioniert ist, derart, dass der Rasthebel (17) mit seinem Vorsprung (29), in dem sich das zweite magnetische Element (23) befindet, sandwichartig zwischen dem ersten und dem dritten magnetischen Element (22 und 27) angeordnet ist.

5. Transportvorrichtung (10) nach Anspruch 3 oder 4, **dadurch gekennzeichnet, dass** der Grundkörper (19) im Bereich der Vertiefung (28) einen Durchbruch (31) aufweist, dessen Hauptausrichtung parallel zur Schwenkachse S und Drehachse D ausgerichtet ist, derart, dass der Vorsprung (29) des Rasthebels (17) mit seinem freien Ende mindestens abschnittsweise in diesen Durchbruch (31) eintaucht, derart, dass eine Seitenwand (32) des Durchbruchs (31) in Ergänzung zum Rastbolzen (18) als Anschlag für den Rasthebel (17) in seiner Verriegelungsposition ausgebildet ist.

6. Transportvorrichtung (10) nach einem oder mehreren der Ansprüche 1 bis 5, **dadurch gekennzeichnet, dass** dem Befestigungskörper (15) ein Drehkörper (25) in Form eines Malteserkreuzes zugeordnet ist, das zum einen vier im Bereich des Umfangs um 90° versetzt zueinander angeordnete Ausnehmungen (35) zum Eingreifen des Betätigungsorgans (21) zum Drehen des Befestigungskörpers (15) und zum anderen auf der dem Aufnahmekörper (14) zugewandten Seite mindestens vier um 90° versetzt zueinander angeordnete Rastbolzen (18), die mit dem Rasthebel (17) in Wirkverbindung bringbar sind, aufweist.

7. Transportvorrichtung (10) nach Anspruch 6, **dadurch gekennzeichnet, dass** der Rasthebel (17) auf seiner der Drehachse D zugewandten Innenseite (I) eine Ausnehmung (36) zum Aufnehmen eines Rastbolzens (18) aufweist.

8. Transportvorrichtung (10) nach einem oder mehreren der Ansprüche 1 bis 7, **dadurch gekennzeichnet, dass** die Transporteinheit (11) eine Transportkette (43) umfasst und entlang der Transportkette (43) mindestens abschnittsweise mindestens eine Führungsschiene (44, 46) angeordnet ist, auf der der Aufnahmekörper (14) der Haltevorrichtung (13) mit einer in dem Grundkörper (19) ausgebildeten Nut (45, 47) geführt ist.

9. Transportvorrichtung (10) nach Anspruch 8, **dadurch gekennzeichnet, dass** zwei beabstandet zueinander angeordnete Führungsschienen (44, 46) mindestens abschnittsweise entlang der Transportkette (43) angeordnet sind, zwischen denen der Grundkörper (19) mit entsprechenden Nuten (45, 47) geführt ist, wobei an einer Führungsschiene (46) das Betätigungsorgan (20) zum Betätigen des Rasthebels (17) und an der anderen Führungsschiene (44) das Betätigungsorgan (21) zum Drehen des Befestigungskörpers (15) angeordnet ist.

10. Transportvorrichtung (10) nach einem oder mehreren der Ansprüche 1 bis 9, **dadurch gekennzeichnet, dass** das Betätigungsorgan (21) zum Drehen des Befestigungskörpers (15) in Transportrichtung T der Transporteinheit (11) hinter dem Betätigungsorgan (20) zum Betätigen des Rasthebels (17) angeordnet ist.

11. Transportvorrichtung (10) nach einem oder mehreren der Ansprüche 1 bis 10, **dadurch gekennzeichnet, dass** der Rasthebel (17) mit einer Betätigungsnase (38) über den Grundkörper (19) des Aufnahmekörpers (14) hinausragt, derart, dass das Betätigungsorgan (20) zum Betätigen des Rasthebels (17) beim Passieren des Transportsattels (12) mit der Betätigungsnase (38) des Rasthebels (17) in Wirkverbindung tritt.

12. Transportvorrichtung (10) nach einem oder mehreren der Ansprüche 1 bis 11, **dadurch gekennzeichnet, dass** die magnetischen Elemente (22, 23, 27) mindestens teilweise als Stabmagnete ausgebildet sind, wobei die Stabmagnete mit ihrer Längsachse in Transportrichtung T ausgerichtet sind.

13. Transportvorrichtung (10) nach Anspruch 12, **dadurch gekennzeichnet, dass** die Stabmagnete mindestens teilweise in Sacklöchern angeordnet sind, wobei die offenen Seiten der Sacklöcher mittels einer Abdeckung verschlossen sind, derart, dass die innerhalb der Sacklöcher befindlichen Stabmagnete vollständig gegenüber der Umgebung abgeschirmt sind.

## Claims

1. Transport apparatus (10), configured and adapted for transporting eviscerated poultry bodies or parts thereof in a direction of transport T along a transport path, along which different processing stations can be arranged, comprising a transport unit (11) driven in a continuously revolving manner and at least one transport saddle (12) fastened thereto for holding and positioning the poultry bodies or parts thereof during transport, wherein a holding apparatus (13) is provided for fastening the transport saddle (12) to the transport unit (11), which holding apparatus consists of a receptacle body (14) associated with the transport unit (11) and a fastening body (15) associated with the transport saddle (12), which fastening body is releasably connected to the receptacle body (14) and is mounted in the receptacle body (14) so as to be rotatable about an axis of rotation D, wherein the holding apparatus (13) comprises a latching device (16) by means of which the fastening body (15) and thus the transport saddle (12) can be locked in at least two different latching positions, wherein the latching device (16) comprises a latching lever (17) and at least two latching bolts (18), wherein the latching lever (17) is arranged on a main body (19) of the receptacle body (14) so as to be pivotable about a pivot axis S, which is oriented parallel to the axis of rotation D, and is movable from a locking position, in which the latching lever (17) is in engagement with a latching bolt (18) associated with the fastening body (15), into a release position, in which the latching lever (17) is out of engagement with a latching bolt (18) of the fastening body (15), and back, wherein the transport apparatus (10) comprises a first actuating member (20) for actuating the latching lever (17) at least from the locking position into the release position and a second actuating member (21) for rotating the fastening body (15) in the release position of the latching lever (17), **characterised in that** the latching device (16) comprises at least two magnetic elements (22, 23), wherein a first magnetic element (22) is associated with the receptacle body (14) and a second magnetic element (23) is associated with the latching lever (17), such that unlike poles of the first magnetic element (22) and of the second magnetic element (23) are located opposite one another so as to attract one another and pull the latching lever (17) into the locking position.

2. Transport apparatus (10) according to claim 1, **characterised in that** the latching device (16) comprises a third magnetic element (27) which is associated with the receptacle body (14) and is positioned on the side of the latching lever (17) opposite the first magnetic element (22), such that like poles of the second magnetic element (23) and of the third magnetic element (27) are located opposite one another so as to repel one another and push the latching lever (17) into the locking position.

3. Transport apparatus (10) according to claim 1 or 2, **characterised in that** the main body (19) of the receptacle body (14) has a depression (28) at its trailing end (E) in the direction of transport T on the side facing the fastening body (15), into which depression the latching lever (17) with a protrusion (29) dips at least in part, wherein the first magnetic element (22) is positioned in the depression (28) of the main body (19) in the region of a rear wall (30) and the second magnetic element (23) is positioned in the protrusion (29) of the latching lever (17).

4. Transport apparatus (10) according to claim 2 or 3, **characterised in that** the third magnetic element (27) is positioned in the depression (28) of the main body (19) in the region of a side wall, such that the latching lever (17) is arranged with its protrusion (29), in which the second magnetic element (23) is located, between the first and the third magnetic element (22 and 27) in the manner of a sandwich.

5. Transport apparatus (10) according to claim 3 or 4, **characterised in that** the main body (19) has an opening (31) in the region of the depression (28), the main orientation of which opening is oriented parallel to the pivot axis S and the axis of rotation D, such that the protrusion (29) of the latching lever (17) dips with its free end at least in part into this opening (31), such that a side wall (32) of the opening (31), in addition to the latching bolt (18), is configured as an abutment for the latching lever (17) in its locking position.

6. Transport apparatus (10) according to one or more of claims 1 to 5, **characterised in that** there is associated with the fastening body (15) a rotating body (25) in the form of a Maltese cross, which has on the one hand four recesses (35) arranged offset relative to one another by 90° in the region of the circumference for the engagement of the actuating member (21) for rotating the fastening body (15), and on the other hand, on the side facing the receptacle body (14), at least four latching bolts (18) arranged offset relative to one another by 90°, which latching bolts can be brought into operative connection with the latching lever (17).

7. Transport apparatus (10) according to claim 6, **characterised in that** the latching lever (17) has on its inner side (I) facing the axis of rotation D a recess (36) for receiving a latching bolt (18).

8. Transport apparatus (10) according to one or more of claims 1 to 7, **characterised in that** the transport unit (11) comprises a transport chain (43), and at least one guide rail (44, 46) is arranged along the transport chain (43) at least in some regions, on which guide rail the receptacle body (14) of the holding apparatus (13) is guided with a groove (45, 47) formed in the main body (19).

9. Transport apparatus (10) according to claim 8, **characterised in that** two guide rails (44, 46) arranged spaced apart from one another are arranged along the transport chain (43) at least in some regions, between which guide rails the main body (19) is guided with corresponding grooves (45, 47), wherein the actuating member (20) for actuating the latching lever (17) is arranged on one guide rail (46) and the actuating member (21) for rotating the fastening body (15) is arranged on the other guide rail (44).

10. Transport apparatus (10) according to one or more of claims 1 to 9, **characterised in that** the actuating member (21) for rotating the fastening body (15) is arranged behind the actuating member (20) for actuating the latching lever (17) in the direction of transport T of the transport unit (11).

11. Transport apparatus (10) according to one or more of claims 1 to 10, **characterised in that** the latching lever (17) projects with an actuating lug (38) beyond the main body (19) of the receptacle body (14), such that the actuating member (20) for actuating the latching lever (17) enters into operative connection with the actuating lug (38) of the latching lever (17) as the transport saddle (12) passes.

12. Transport apparatus (10) according to one or more of claims 1 to 11, **characterised in that** at least some of the magnetic elements (22, 23, 27) are in the form of bar magnets, wherein the bar magnets are oriented with their longitudinal axis in the direction of transport T.

13. Transport apparatus (10) according to claim 12, **characterised in that** at least some of the bar magnets are arranged in blind holes, wherein the open sides of the blind holes are closed by means of a cover, such that the bar magnets inside the blind holes are completely shielded relative to the surroundings.

## Revendications

1. Dispositif de transport (10), configuré et adapté pour le transport de carcasses de volailles vides ou de parties de celles-ci dans une direction de transport T le long d'une voie de transport, le long de laquelle différentes stations de traitement peuvent être agencées, comprenant une unité de transport (11) entraînée en circulation sans fin, ainsi qu'au moins une selle de transport (12) fixée à celle-ci pour le maintien et le positionnement des carcasses de volailles ou de parties de celles-ci pendant le transport, un dispositif de maintien (13) étant prévu pour la fixation de la selle de transport (12) à l'unité de transport (11), qui est constitué par un corps de réception (14) associé à l'unité de transport (11) et un corps de fixation (15) associé à la selle de transport (12), qui est relié de manière amovible au corps de réception (14) et qui est monté dans le corps de réception (14) de manière rotative autour d'un axe de rotation D, le dispositif de maintien (13) comprenant un appareil d'encliquetage (16), au moyen duquel le corps de fixation (15) et par conséquent la selle de transport (12) peuvent être bloqués dans au moins deux positions d'encliquetage différentes, l'appareil d'encliquetage (16) comprenant un levier d'encliquetage (17) et au moins deux goujons d'encliquetage (18), le levier d'encliquetage (17) étant agencé de manière pivotante autour d'un axe de pivotement S, qui est orienté parallèlement à l'axe de rotation D, sur un corps de base (19) du corps de réception (14), et pouvant être déplacé d'une position de verrouillage, dans laquelle le levier d'encliquetage (17) est engagé avec un goujon d'encliquetage (18), qui est associé au corps de fixation (15), dans une position de libération, dans laquelle le levier d'encliquetage (17) est désengagé d'un goujon d'encliquetage (18) du corps de fixation (15), et en retour, le dispositif de transport (10) comprenant un premier organe d'actionnement (20) pour l'actionnement du levier d'encliquetage (17) au moins de la position de verrouillage dans la position de libération, et un deuxième organe d'actionnement (21) pour la rotation du corps de fixation (15) dans la position de libération du levier d'encliquetage (17), **caractérisé en ce que** l'appareil d'encliquetage (16) comprend au moins deux éléments magnétiques (22, 23), un premier élément magnétique (22) étant associé au corps de réception (14) et un deuxième élément magnétique (23) étant associé au levier d'encliquetage (17), de telle sorte que des pôles opposés respectifs du premier élément magnétique (22) et du deuxième élément magnétique (23) se font face de manière attractive afin de tirer le levier d'encliquetage (17) dans la position de verrouillage.

2. Dispositif de transport (10) selon la revendication 1, **caractérisé en ce que** l'appareil d'encliquetage (16) comprend un troisième élément magnétique (27), qui est associé au corps de réception (14) et qui est placé sur le côté du levier d'encliquetage (17) à l'opposé du premier élément magnétique (22), de telle sorte que des pôles identiques du deuxième élément magnétique (23) et du troisième élément magnétique (27) se font face de manière répulsive pour pousser le levier d'encliquetage (17) dans la position de verrouillage.

3. Dispositif de transport (10) selon la revendication 1 ou 2, **caractérisé en ce que** le corps de base (19) du corps de réception (14) présente un creux (28) à son extrémité arrière (E) dans la direction de transport T sur le côté tourné vers le corps de fixation (15), dans lequel le levier d'encliquetage (17) pénètre au moins en sections avec une saillie (29), le premier élément magnétique (22) étant positionné dans le creux (28) du corps de base (19) dans la zone d'une paroi arrière (30) et le deuxième élément magnétique (23) étant positionné dans la saillie (29) du levier d'encliquetage (17).

4. Dispositif de transport (10) selon la revendication 2 ou 3, **caractérisé en ce que** le troisième élément magnétique (27) est positionné dans le creux (28) du corps de base (19) dans la zone d'une paroi latérale, de telle sorte que le levier d'encliquetage (17) est agencé avec sa saillie (29), dans laquelle se trouve le deuxième élément magnétique (23), en sandwich entre le premier et le troisième élément magnétique (22 et 27).

5. Dispositif de transport (10) selon la revendication 3 ou 4, **caractérisé en ce que** le corps de base (19) présente, dans la zone du creux (28), une ouverture (31) dont l'orientation principale est orientée parallèlement à l'axe de pivotement S et à l'axe de rotation D, de telle sorte que la saillie (29) du levier d'encliquetage (17) pénètre au moins en sections dans cette ouverture (31) avec son extrémité libre, de telle sorte qu'une paroi latérale (32) de l'ouverture (31) est configurée en tant que butée pour le levier d'encliquetage (17) dans sa position de verrouillage en plus du goujon d'encliquetage (18).

6. Dispositif de transport (10) selon une ou plusieurs des revendications 1 à 5, **caractérisé en ce qu'**un corps de rotation (25) en forme de croix de Malte est associé au corps de fixation (15), qui présente, d'une part, quatre évidements (35) agencés dans la zone de la circonférence en décalage de 90° les uns par rapport aux autres, pour l'engagement de l'organe d'actionnement (21) pour la rotation du corps de fixation (15) et, d'autre part, sur le côté tourné vers le corps de réception (14), au moins quatre goujons d'encliquetage (18) agencés en décalage de 90° les uns par rapport aux autres, qui peuvent être amenés en liaison active avec le levier d'encliquetage (17).

7. Dispositif de transport (10) selon la revendication 6, **caractérisé en ce que** le levier d'encliquetage (17) présente un évidement (36) pour la réception d'un goujon d'encliquetage (18) sur son côté intérieur (I) tourné vers l'axe de rotation D.

8. Dispositif de transport (10) selon une ou plusieurs des revendications 1 à 7, **caractérisé en ce que** l'unité de transport (11) comprend une chaîne de transport (43) et au moins un rail de guidage (44, 46) est agencé au moins en sections le long de la chaîne de transport (43), sur lequel le corps de réception (14) du dispositif de maintien (13) est guidé avec une rainure (45, 47) formée dans le corps de base (19).

9. Dispositif de transport (10) selon la revendication 8, **caractérisé en ce que** deux rails de guidage (44, 46) agencés à distance l'un de l'autre sont agencés au moins en sections le long de la chaîne de transport (43), entre lesquels le corps de base (19) est guidé avec des rainures (45, 47) correspondantes, l'organe d'actionnement (20) pour l'actionnement du levier d'encliquetage (17) étant agencé sur un rail de guidage (46) et l'organe d'actionnement (21) pour la rotation du corps de fixation (15) étant agencé sur l'autre rail de guidage (44).

10. Dispositif de transport (10) selon une ou plusieurs des revendications 1 à 9, **caractérisé en ce que** l'organe d'actionnement (21) pour la rotation du corps de fixation (15) est agencé dans la direction de transport T de l'unité de transport (11) derrière l'organe d'actionnement (20) pour l'actionnement du levier d'encliquetage (17).

11. Dispositif de transport (10) selon une ou plusieurs des revendications 1 à 10, **caractérisé en ce que** le levier d'encliquetage (17) dépasse, avec un bec d'actionnement (38), du corps de base (19) du corps de réception (14), de telle sorte que l'organe d'actionnement (20) pour l'actionnement du levier d'encliquetage (17) entre en liaison active avec le bec d'actionnement (38) du levier d'encliquetage (17) lors du passage de la selle de transport (12).

12. Dispositif de transport (10) selon une ou plusieurs des revendications 1 à 11, **caractérisé en ce que** les éléments magnétiques (22, 23, 27) sont configurés au moins partiellement en tant que barreaux magnétiques, les barreaux magnétiques étant orientés avec leur axe longitudinal dans la direction de transport T.

13. Dispositif de transport (10) selon la revendication 12, **caractérisé en ce que** les barreaux magnétiques sont au moins partiellement agencés dans des trous borgnes, les côtés ouverts des trous borgnes étant fermés au moyen d'un couvercle, de telle sorte que les barreaux magnétiques se trouvant à l'intérieur des trous borgnes sont complètement protégés de l'environnement.
